# EUROPÄISCHE PATENTANMELDUNG

(11) **EP 1 190 933 A2**
(43) Veröffentlichungstag der Anmeldung: **27.03.2002**
(21) Anmeldenummer: 01122559.6
(22) Anmeldetag: 25.09.2001
(51) Int. Cl.: B62D 1/08, B62D 1/04

(54) **Fahrzeuglenkrad**

(30) Priorität: 26.09.2000 DE 20016637 U
(71) Anmelder: TRW Automotive Safety Systems GmbH & Co. KG, 63743 Aschaffenburg (DE)
(72) Erfinder: Lorenz, Christian, 63849 Leidersbach (DE)
(74) Vertreter: Kitzhofer, Thomas, Dipl.-Ing.

(57) **Zusammenfassung**

Ein Fahrzeuglenkrad, mit einer Nabe (3), wenigstens einer Speiche (7) und einem Lenkradkranz (5) ist dadurch gekennzeichnet, daß an der Speiche (7) eine in alle Richtungen wirkende Schwingungsentkoppelungseinrichtung vorgesehen ist, die den Lenkradkranz (5) von wenigstens einem Abschnitt (17) der Speiche (7) schwingungsmäßig wenigstens weitgehend entkoppelt.

## Beschreibung

Die Erfindung betrifft ein Fahrzeuglenkrad, mit einer Nabe, wenigstens einer Speiche und einem Lenkradkranz.

Im Fahrbetrieb kann es zu Vibrationen des Fahrzeuglenkrads kommen, was lange Fahrten für den Fahrer anstrengend macht und das Lenkgefühl verschlechtert. Es sind deshalb Bestrebungen im Gange, das Lenkrad gegenüber der Lenkwelle zu dämpfen oder zum Beispiel das Gassack-Modul schwingend in der Lenkradnabe zu befestigen.

Aus der DE 20 13 795 B2 ist z.B. ein Lenkrad bekannt, das eine Lenkradnabe, einen Lenkradkranz und zwei aus Speichenabschnitten bestehende Speichen aufweist. Zwischen den Speichenabschnitten und jeweils am Übergang von Speiche zu Lenkradnabe bzw. Lenkradkranz sind Kugelgelenke mit Dämpfungselementen vorgesehen. Die hier offenbarte Speichenstruktur muß eine bestimmte Steifigkeit haben; daher kann hier nicht von einer Schwingungsentkoppelung in radialer Richtung und/oder in Umfangsrichtung ausgegangen werden. Vielmehr zielt die in dieser Druckschrift offenbarte Speichenstruktur darauf ab, eine Nachgiebigkeit des Lenkradkranzes in Aufprallrichtung eines Fahrzeuglenkers zu schaffen.

Die Erfindung schafft ein Fahrzeuglenkrad, welches bei einfachem Aufbau ein hohes Maß an Fahrkomfort dank geringer Vibrationsneigung bietet. Dies wird bei einem Fahrzeuglenkrad der eingangs genannten Art dadurch erreicht, daß an der Speiche eine in alle Richtungen wirkende Schwingungsentkoppelungseinrichtung vorgesehen ist, die den Lenkradkranz von wenigstens einem Abschnitt der Speiche schwingungsmäßig wenigstens weitgehend entkoppelt. Beim erfindungsgemäßen Fahrzeuglenkrad ist zwischen Lenkradnabe und Lenkradkranz, also entweder innerhalb der Speiche oder am Übergang Speiche zu Lenkradkranz eine Einrichtung zur Schwingungsentkoppelung vorgesehen, so daß der Lenkradkranz zumindest geringer vibriert als bei bislang bekannten Lenkrädern.

Die Schwingungsentkoppelungseinrichtung wird durch ein elastisches Lager gebildet, wie die bevorzugte Ausführungsform vorsieht, wobei das Lager zum Beispiel ein Verbundlager ist. Eine direkte Anlage zwischen starren Teilen, die an das Lager angrenzen, gibt es nicht, da Kräfte in allen Richtungen über das elastische Lager übertragen werden müssen. Das Lager besteht aus mehreren Teilen, von denen einige so elastisch sind, daß sie Vibrationen, die beispielsweise im Bereich der Lenkradnabe oder der Lenkwelle auftreten, nicht in den Lenkradkranz weiterleiten.

Die Speiche und/oder der Lenkradkranz können eine Umschäumung aufweisen, die Teil des Lagers ist, so daß das Lager kostengünstig ausgebildet werden kann und beim Umschäumprozeß wenigstens zum Teil hergestellt wird.

Eine Ausführungsform der Erfindung sieht vor, daß das Lager einen Zapfen und eine Aufhahmeschale (z.B. eine Buchse) für den Zapfen aufweist, zwischen denen ein elastisches Ausgleichselement angeordnet ist. Der Lenkradkranz weist vorzugsweise ergänzend hierzu einen Skelettring auf, wobei am Skelettring der Zapfen oder die Aufnahmeschale befestigt ist und die Speiche das jeweilige Gegenstück, also die Aufhahmeschale bzw. den Zapfen aufweist.

Um den Zapfen in die Aufnahmeschale bei der Montage zu bringen, ist beispielsweise die Speiche so flexibel ausgebildet, daß bei der Montage der Zapfen axial in die Aufnahmebuchse einrasten kann.

Eine andere Möglichkeit der Verbindung der durch die Schwingungsentkoppelungseinrichtung voneinander getrennten Teile besteht darin, die Speiche in Speichenabschnitte zu teilen, die sich zur Schaffung eines Befestigungsflansches überlappen. Im Bereich des Befestigungsflansches kann beispielsweise die Schwingungsentkoppelungseinrichtung vorgesehen sein. Darüberhinaus können die Speichenabschnitte auch das Einführen des Zapfens in die Aufnahmeschale ermöglichen, denn üblicherweise ist der Lenkradkranz ungeteilt, so daß ein radiales Fügen von radialen inneren Abschnitten des Lenkrades in radial äußere Abschnitte nur mit erhöhtem konstruktiven Aufwand möglich ist.

Eine weitere Ausführungsform sieht vor, daß die Speiche in Speichenabschnitte geteilt ist, die durch ein die Speichenabschnitte umgebendes Lager als Schwingungsentkoppelungseinrichtung miteinander verbunden sind. Das Lager umschließt die Speichenabschnitte wie eine Hülse und arretiert sie aneinander derart, daß einerseits zwar die Lenkkräfte übertragen werden, andererseits aber eine Schwingungsentkoppelung in einem bestimmten Frequenzbereich erreicht wird.

Das Verbinden der Speiche mit dem möglichst ungeteilten Lenkradkranz kann beispielsweise dadurch erfolgen, daß der Lenkradkranz mit einem Skelettring mit radial einwärts gewandten Fortsätzen aus Blech ausgestattet ist, die so gebogen sind, daß sie das dem Skelettring zugewandte Ende der Speiche umgreifen. Diese Art der Befestigung ist sehr einfach und billig herzustellen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Draufsicht auf eine Ausführungsform des erfindungsgemäßen Lenkrades,
Figur 2 eine vergrößerte Ansicht des in Figur 1 mit X bezeichneten Bereichs, teilweise im Schnitt,
Figur 3 eine Schnittansicht im Bereich des Übergangs Speiche zu Lenkradkranz gemäß einer zweiten Ausrührungsform,
Figur 4 eine Schnittansicht im Bereich des Übergangs Speiche zu Lenkradkranz gemäß einer dritten Ausführungsform,
Figur 5 eine Schnittansicht im Bereich des Übergangs Speiche zu Lenkradkranz gemäß einer vierten Ausführungsform,
Figur 6 eine Schnittansicht im Bereich des Übergangs Speiche zu Lenkradkranz gemäß einer fünften Ausführungsform,
Figuren 7 und 8 schematische Darstellungen verschiedener Phasen der Montage des erfindungsgemäßen Lenkrades,
Figur 9 eine Schnittansicht durch eine sechste Ausführungsform des erfindungsgemäßen Lenkrades,
Figur 10 eine Schnittansicht im Bereich des Übergangs Speiche zu Lenkradkranz gemäß einer siebten Ausführungsform und
Figur 11 eine Querschnittsansicht längs der Linie XI-XI in Figur 10.

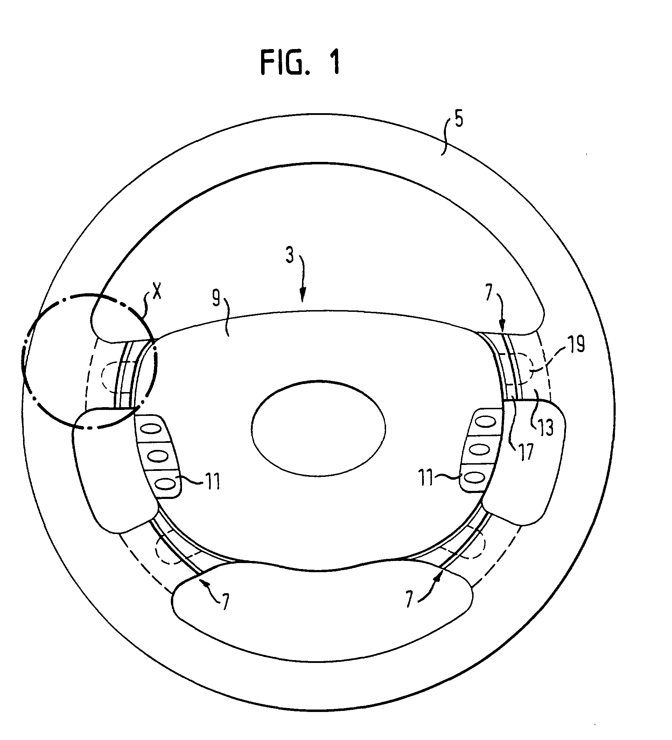

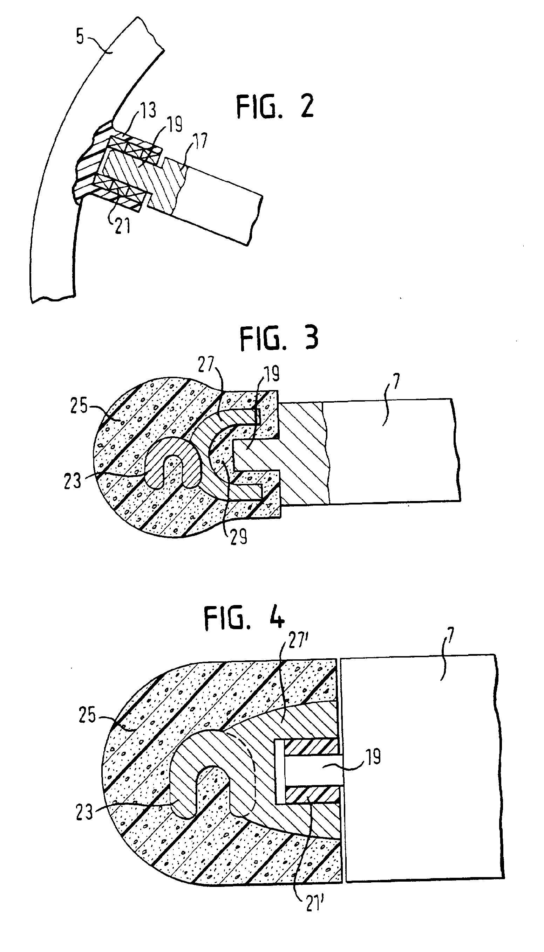

In Figur 1 ist ein Fahrzeuglenkrad dargestellt, welches eine Nabe 3, einen Lenkradkranz 5 und vier Speichen 7 aufweist. Mit 9 ist ein Hupentasterfeld, und mit 11 sind Multifunktionsschalter bezeichnet. Jede Speiche 7 ist in einen äußeren und einen radial inneren Speichenabschnitt 13 bzw. 17 geteilt, um den Lenkradkranz 5 gegenüber der Nabe 3 schwingungsmäßig weitestgehend zu entkoppeln. Hierzu ist in jeder Speiche 7 eine Schwingungsentkoppelungseinrichtung im Bereich des Übergangs der Speichenabschnitte 13, 17 vorgesehen, die in Figur 2 besser zu erkennen ist. Der innere Speichenabschnitt 17 weist einen Zapfen 19 auf, der in ein Verbundlager 21 gesteckt ist, das in einer Öffnung in dem äußeren Speichenabschnitt 13 sitzt. Das Verbundlager 21 ist aus mehreren elastischen Ringen zusammengesetzt, die eine Schwingungsentkoppelung des Lenkradkranzes 5 mit daran befestigtem äußeren Speichenabschnitt 13 vom inneren Speichenabschnitt 17 samt Nabe 3 erreicht. Die Schwingungsentkoppelungseinrichtung wirkt bei dieser wie bei allen übrigen Ausführungsformen in alle Richtungen, darunter auch in radialer, axialer und Umfangsrichtung.

Das Verbundlager 21 bildet ein elastisches Ausgleichselement und der äußere Speichenabschnitt 13 eine Aufnahmeschale für den Zapfen 19 und das Lager 21.

Figur 3 zeigt das Innere des Lenkradkranzes, in dem ein Skelettring 23 vorgesehen ist, welcher von einer PU-Umschäumung 25 umgeben ist. Im Bereich des Übergangs zu den Speichen 7, deren Umschäumung nicht explizit dargestellt ist, ist eine Aufnahmeschale 27 am Skelettring 23, z. B. durch Schweißen befestigt, sie kann aber auch angegossen sein. Auch die Aufnahmeschale 27 wird umschäumt, wobei die Umschäumung 25 auch im Inneren 29 der Schale 27 vorgesehen ist. In diesem Bereich ersetzt die Umschäumung das Verbundlager 21 in Figur 2 und bildet das elastische Ausgleichselement, in das der Zapfen 19 der Speiche 7 ragt. Die Schwingungsentkoppelung wird bei dieser Ausführungsform folglich durch die Aufhahmeschale 27, die PU-Umschäumung 25 im Bereich des Inneren 29 der Aufhahmeschale 27 und den Lagerzapfen 19 gebildet. Die Entkoppelung erfolgt hier zwischen dem Lenkradkranz 5 und der gesamten Speiche 7.

Bei der Ausführungsform nach Figur 4 ist die Lagerschale 27' an den Skelettring 23 angegossen. Das elastische Ausgleichselement im Inneren der Aufnahmeschale 27' wird durch eine eingesetzte, elastische Buchse 21' gebildet, in die der Zapfen 19 ragt. Bei der Ausführungsform nach Figur 4 ist von außen keine Unterteilung der Speiche 7 mehr zu sehen, vielmehr ist die Schwingungsentkoppelungseinrichtung am Übergang Speiche zu Lenkradkranz angeordnet, so daß nur noch der Lenkradkranz schwingungsmäßig entkoppelt wird.

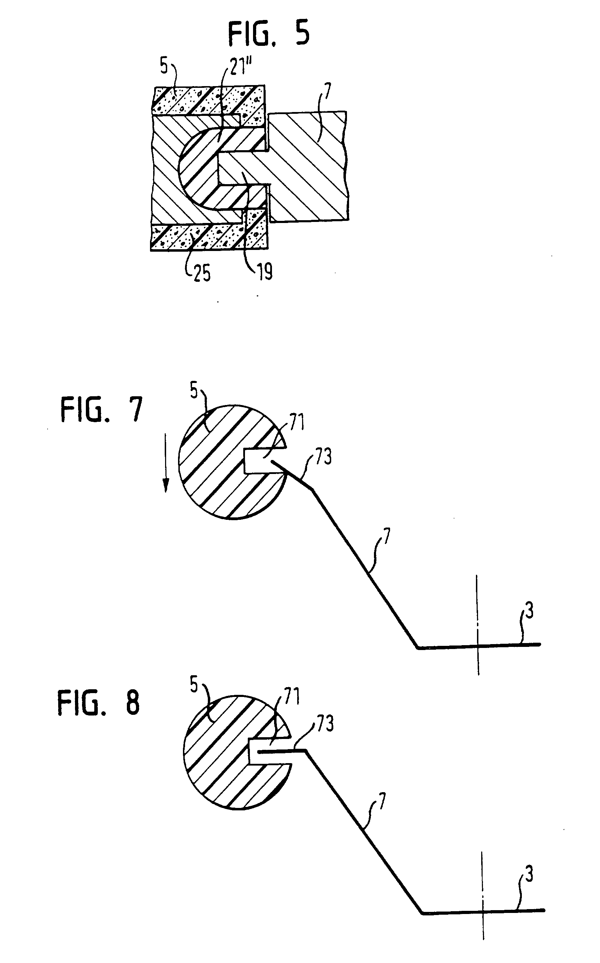

Bei der Ausführungsform nach Figur 5 ist eine gespritzte topfförmige Buchse 21" in den Lenkradkranz 5 eingesetzt, um die Schwingungsentkoppelung zu erreichen.

Bei der Ausführungsform nach Figur 6 ist jede Speiche 7 in zwei bereits erläuterte Speichenabschnitte 13, 17 unterteilt, wobei auch das Speichenskelett aus zwei Abschnitten 33, 37 besteht, welche umschäumt sind. Die Umschäumung ist mit 39 bezeichnet. Die Skelettabschnitte 33, 37 werden von einem elastischen Lager 41, bestehend aus einem Metallring 40 mit zwei innenseitigen ringförmigen Lagerabschnitten 43, 45 aus elastischem Material umgeben, um eine kräftemäßige Verbindung der Speichenabschnitte 13, 17 bei gleichzeitiger Schwingungsentkoppelung zu erreichen.

Da die Speichen üblicherweise einstückig mit der Nabe verbunden sind, müssen Maßnahmen getroffen werden, um die Zapfen 19 in die entsprechenden Lager stecken zu können.

Bei der Ausführungsform nach den Figuren 7 und 8 besteht der Skelettabschnitt von Nabe 3 und Speichen 7 aus Blech. Der Lenkradkranz 5 hat eine nicht näher dargestellte Aufhahmeschale, die durch eine Öffnung 71 charakterisiert wird. Zu Beginn der Montage (Figur 7) steht das obere Ende 73 der Speiche 7 schräg nach außen und oben, so daß es nicht oder nur geringfügig in die Öffnung 71 ragt. Durch axiales Verschieben des Lenkradkranzes 5 in Pfeilrichtung bei gleichzeitigem Festhalten der Nabe 3 werden die Speichen 7 nach unten gedrückt und plastisch verformt, wobei das radial äußere obere Ende 73 ebenfalls gebogen wird und nach außen in die Öffnung 71 wandert. Figur 8 zeigt dann den fertig gefügten Zustand. In diesem Zustand kann beispielsweise das Blechskelett der Speichen 7 umschäumt werden.

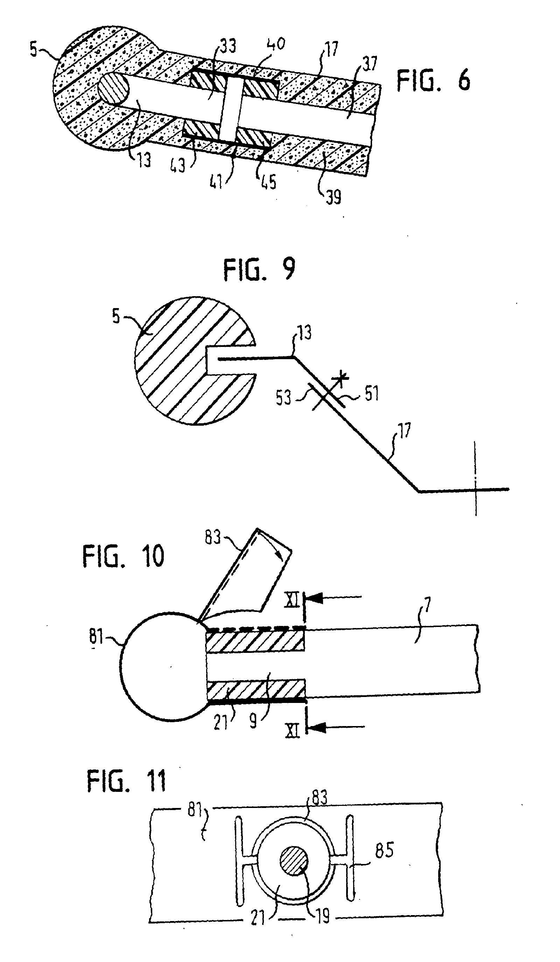

Bei der Ausführungsform nach Figur 9 wird dies beispielsweise dadurch erreicht, daß die Speichenabschnitte 13, 17 jeweils Befestigungsflansche 51, 53 aufweisen, die sich überlappen. Im Bereich der Befestigungsflansche 51, 53 sind die Speichenabschnitte 13, 17 miteinander verschraubt. Der Speichenabschnitt 13 ist in eine hier nicht näher dargestellte Aufnahmeschale im Lenkradkranz 5 gesteckt.

Bei der Ausführungsform nach den Figuren 10 und 11 hat der Lenkradkranz einen Skelettring 81 aus Blech mit zwei gegenüberliegenden radialen Fortsätzen. Der obere Fortsatz 83 des Skelettrings 81 ist vor Beginn des Zusammenbaus des Lenkrads nach oben gebogen, wie in Figur 10 gezeigt ist. Dadurch kann von oben die Nabe samt Speichen 7, Zapfen 19 und auf die Zapfen 19 aufgesetzte elastische Lager 21 in den Skelettring 81 eingesetzt werden. Anschließend wird der obere Fortsatz 83 in Pfeilrichtung nach unten gebogen und drückt auf das Lager 21, so daß dieses, wie in Figur 11 gezeigt ist, vom Fortsatz 83 umgriffen und gehalten wird. Mit 85 ist ein Schlitz zwischen Fortsatz 83 und Skelettring 81 bezeichnet.

## Patentansprüche

1. Fahrzeuglenkrad, mit
einer Nabe (3),
wenigstens einer Speiche (7) und
einem Lenkradkranz (5),
**dadurch gekennzeichnet, daß** an der Speiche (7) eine in alle Richtungen wirkende Schwingungsentkoppelungseinrichtung vorgesehen ist, die den Lenkradkranz (5) von wenigstens einem Abschnitt (17) der Speiche (7) schwingungsmäßig wenigstens weitgehend entkoppelt.

2. Fahrzeuglenkrad nach Anspruch 1, **dadurch gekennzeichnet, daß** die Schwingungsentkoppelungseinrichtung am Übergang Speiche (7) zu Lenkradkranz (5) vorgesehen ist.

3. Fahrzeuglenkrad nach Anspruch 1, **dadurch gekennzeichnet, daß** die Schwingungsentkoppelungseinrichtung innerhalb der Speiche (7) vorgesehen ist und Speichenabschnitte (13, 17) schwingungsmäßig voneinander trennt.

4. Fahrzeuglenkrad nach einem der vorhergehenden Ansprüche, **dadurch gekennzeichnet, daß** die Schwingungsentkoppelungseinrichtung durch ein elastisches Lager (21; 21'; 21"; 41) gebildet ist.

5. Fahrzeuglenkrad nach Anspruch 4, **dadurch gekennzeichnet, daß** das Lager (21) ein Verbundlager ist.

6. Fahrzeuglenkrad nach Anspruch 4, **dadurch gekennzeichnet, daß** die Speiche (7) und/oder der Lenkradkranz (5) eine Umschäumung (25) aufweisen/aufweist und daß die Umschäumung (25) Teil des Lagers ist.

7. Fahrzeuglenkrad nach einem der Ansprüche 4 bis 6, **dadurch gekennzeichnet, daß** das Lager (21') einen Zapfen (19) und eine Aufnahmeschale (27; 27') für den Zapfen (19) aufweist, wobei zwischen Aufnahmeschale (27; 27') und Zapfen (19) ein elastisches Ausgleichselement angeordnet ist.

8. Fahrzeuglenkrad nach Anspruch 7, **dadurch gekennzeichnet, daß** der Lenkradkranz (5) einen Skelettring (23) aufweist, wobei am Skelettring der Zapfen (19) oder die Aufnahmeschale (27; 27') befestigt ist und die Speiche (7) die Aufnahmeschale (27; 27') bzw. den Zapfen (19) aufweist.

9. Fahrzeuglenkrad nach Anspruch 7 oder 8, **dadurch gekennzeichnet, daß** die Speiche (7) so flexibel ausgebildet ist, daß bei der Montage der Zapfen in die Aufhahmeschale (27; 27') eindringen kann.

10. Fahrzeuglenkrad nach einem der vorhergehenden Ansprüche, **dadurch gekennzeichnet, daß** die Speiche (7) in Speichenabschnitte (13, 17) geteilt ist und diese Befestigungsflansche (51, 53) aufweisen, welche sich überlappen.

11. Fahrzeuglenkrad nach einem der vorhergehenden Ansprüche, **dadurch gekennzeichnet, daß** die Speiche (7) in Speichenabschnitte (13, 17) geteilt ist, die durch ein die Speichenabschnitte (13, 17) umgebendes Lager (41) als Schwingungsentkoppelungseinrichtung miteinander verbunden sind.

12. Fahrzeuglenkrad nach einem der vorhergehenden Ansprüche, **gekennzeichnet durch** einen Lenkradkranz (5) mit einem Skelettring (81) mit radial einwärts gewandten Fortsätzen (83) aus Blech, die so gebogen sind, daß sie das dem Skelettring (81) zugewandte Ende der Speiche (7) umgreifen.
